# EUROPEAN PATENT SPECIFICATION

(11) **EP 0 657 339 B1**
(45) Date of publication and mention of the grant of the patent: **10.06.1998**
(21) Application number: 94119551.3
(22) Date of filing: 09.12.1994
(51) Int. Cl.: B62D 3/12

(54) **Rack-and-pinion steering gear for motor vehicles**
Zahnstangenlenkung für Kraftfahrzeuge
Direction à crémaillère pour véhicules à moteur

(30) Priority: 13.12.1993 IT BS930125
(43) Date of publication of application: 14.06.1995
(73) Proprietor: BUGATTI AUTORICAMBI S.p.A., 25045 Casteganto (BS) (IT)
(72) Inventor: Bugatti, Lucio, Lumezzane (Brescia) (IT); Pasinelli, Andrea, Brescia (IT)
(74) Representative: Lecce, Giovanni

(56) References cited:
- DE-A- 3 118 254
- FR-A- 2 317 565
- GB-A- 959 892
- GB-A- 959 893
- GB-A- 1 031 598
- GB-A- 1 376 409
- GB-A- 2 004 956
- US-A- 2 166 116
- US-A- 2 352 412
- US-A- 3 801 125
- US-A- 4 247 156

## Description

This invention relates to a rack-and-pinion steering gear for motor vehicles.

In particular, this invention relates to a system of support for the rack rod in rack-and-pinion steering gears for motor vehicles.

As known, steering gears of the above type comprise a body housing a pinion and a rack rod, which once it is caused to mesh with the teeth of the pinion, shifts longitudinally. In its turn, the pinion is connected to the steering wheel. Of course, the direction depends on the rotatory movement of the pinion, which is transmitted by the action exerted on the steering gear of the motor vehicle. The rack rod is supported in its movement by two supporting elements which, in their turn, are engaged in the body of the gear.

One of these supports is usually located in correspondence of the engagememt point between the teeth of the pinion and the teeth of the rack. This support usually surrounds most of the peripheral surface of the rack rod opposed to the pinion, preventing the lateral shifting. Such support, which for a better individuation shall be called in the following "craddle support", is pushed by elastic elements (preferably provided with one or several springs) against the rack rod, so that the teeth of the latter are always in touch with the teeth of the pinion. In this way, possible coupling clearances of the teeth due to working tolerances, or, in time, to wear, cancel one another systematically.

The second support, fixed on the body of the gear on the opposite side relatively to the side to which the first support is connected, is usually constituted by a bushing. The connecting means between the rack rod and the wheels of the vehicle protrude generally from the ends of the rack rod by means of knuckle joints.

The articulation of said joints is preferably defined on a spheric element whose centre is located on the same axis as the rack rod.

The structure and the ubication of such type of joint or of other similar connecting means formed as extensions on the rack axis, cause the transversal strains to be imperceptible on said rack rod, limiting in this way the range of the bending moment. This happens also when the protrusion of the rod relatively to the bushing or the craddle support has reached the limit of the maximum steering travel. On the contrary, the case is different when the connecting elements between the rod and the wheels are derived from the periphery of said rod through one or more tie-rods connected to same through means located transversally to its axis. Such arrangement leads to bendings on the rack rod, due to the working loads to which it is subject. On the other hand, this inconsistency is inherent in the structural requirements following which the supporting bushing needs being located in such a way that the travel of the rack rod avoids the impact between the fastening elements of the tie-rods (which, as seen, are located on its periphery) and said bushing. Of course, the defect increases progressively when the steering action causes such portion of rack rod to move away from the supporting bushing. It is actually known that by increasing the bending moment one also increases the effect of the vibrations. Such vibrations worsen by resonance the fatigue and therefore the wear of the concerned elements (including obviously those that, branching off from the gear, lead to the wheels and the steering wheel) and the psychophysical stress of the driver. This happens also when the connecting means are provided with shock absorbing materials (e.g., rubber or silentbloc).

Besides, because of structural reasons, aiming in same cases at reducing the overall dimensions of the gear, the supporting bushing has been brought near the craddle support in such a way as to place the rack rod, and the associated tie-rod fastening means, outside the bushing in a "cantilever-like" position. In this case, the precariousness of the structure is evident in itself. Besides, the various correction attempts have failed and have not allowed consequently to prevent the rapid wear of the gear parts, nor the stress of the driver.

A rack-and-pinion steering gear for motor vehicles having the features of the preamble of claim 1 is known from FR-A-2 317 565.

The rack-and-pinion steering gear for motor vehicles of the present invention is characterized in that the sliding shoe is provided with one or more peripheral cleft-like grooves which start from its external peripheral surface and extend in depth in a direction not directed towards its centre; the portions of the sliding shoe situated between two consecutive cleft-like grooves being flexible and slightly strainingly engaging the internal surface of the extension.

This invention shall be better understood thanks to the following detailed description, wherein reference is made to the attached drawings which illustrate a preferred, non limitative embodiment of this invention, and wherein:
Fig. 1 is a schematic view of a longitudinal section of the rack-and-pinion steering gear subject matter of this invention;
Fig. 2 is a schematic view of a detail of the gear of Fig. 1, seen from B;
Fig. 3 is a schematic view of the section of Fig. 2, with a through plane along the A-A line;
Fig. 4 is a lateral schematic view of the sliding shoe, and
Fig. 5 is a schematic view of the sliding shoe of Fig. 4.

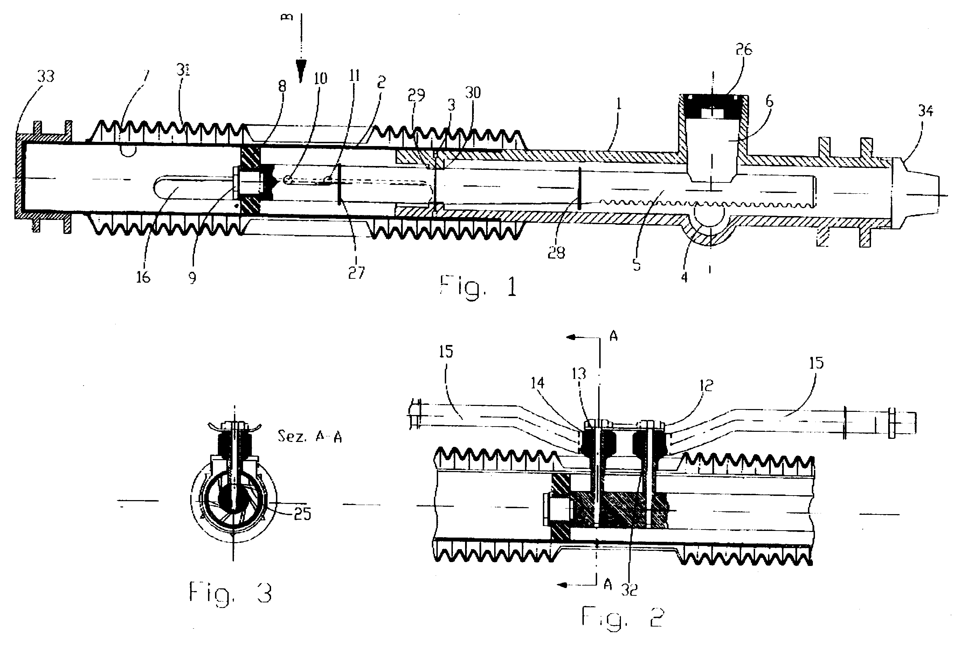

With special reference to the above drawings, the rack-and-pinion steering gear subject matter of this invention comprises a body composed by a cylinder block (1) and an extention (2), made integral to one another by means of several pegs (3). A pinion (4) and a rack rod (5) are housed in said body. In correspondence of pinion (4), the rack rod (5) is supported by the craddle support (6). On the opposite side, the rack rod (5) is supported by extension (2), on whose internal peripheral surface (7) a sliding shoe (8) adheres. In its turn, said sliding shoe (8) is fastened to the rack rod by a screw (9). Next to the sliding shoe (8) two threaded holes (10, 11) are obtained, where bolts (12) are screwed (Figs. 2 and 3). Said bolts (12) lock, through bushings (13) of silentbloc (14), tie-rods (15) oriented towards the means (not shown) connecting with the wheels. Said tie-rods may be either transversal or axial: the transversal ones branch off from the periphery of the rack rod (5) and run towards the outside of the body, passing through an opening provided on the body; while the axial ones extend from side openings towards the inside of the body. The wall of extension (2) is provided with a longitudinal opening (16), so as to allow the free sliding of bushings (13) during the alternate longitudinal movement of the rack rod (5). Such embodiment of this invention avoids a fixed support point of the rack rod (5) which has to take into account (as in the cases of application of fixed bushings to the body of the gear) the travel which said rod has to make to complete the steering width allowed by the vehicle. In fact, in the embodiment of this invention, such point of support adapts, according to a same rate, to the length of the shifting of the rack rod (5), finding in this way an automatic position along the whole length of the internal peripheral surface (7) of extension (2), in combination with a shifting of the same length of the sliding shoe (8).

Therefore, according to this invention, the values of the bending moment are defined only by the overall dimensions of the means provided on the rack rod (5), i.e. sliding shoe (8), screw (9), bolts (12), bushings (13), silentbloc (14) and tie-rod (15). Lacking the variable introduced by the travel of the rack rod, said values remain almost constant and, what is more, irrelevant. According to this invention, the sliding shoe (8) made from plastic material having a low wear coefficient, is provided with one or more peripheral clefts (17) (see Fig. 5), forming flanges (24). Said clefts (17) starting from the external circumference of sliding shoe (8) and preferably from the point where such surface and a straight line passing through center (19) of said sliding shoe meet, sink, in a direction non-convergent relatively to said center (19), causing in this way flanges (24) to be flexible. Said clefts (17) may develop perpendicularly to the two sides of the sliding shoe (8) or diagonally relatively to the axis of same. In this way the sliding shoe (8) taken on a character of flexibility, which puts it in the condition of being slightly strainingly engaged in surface (7) of extension (2). This fact, besides preventing pounding-in effects within its seat, allows the automatic recovery of possible wears which create in time on its own surface and on the internal one of the extension where it slides.

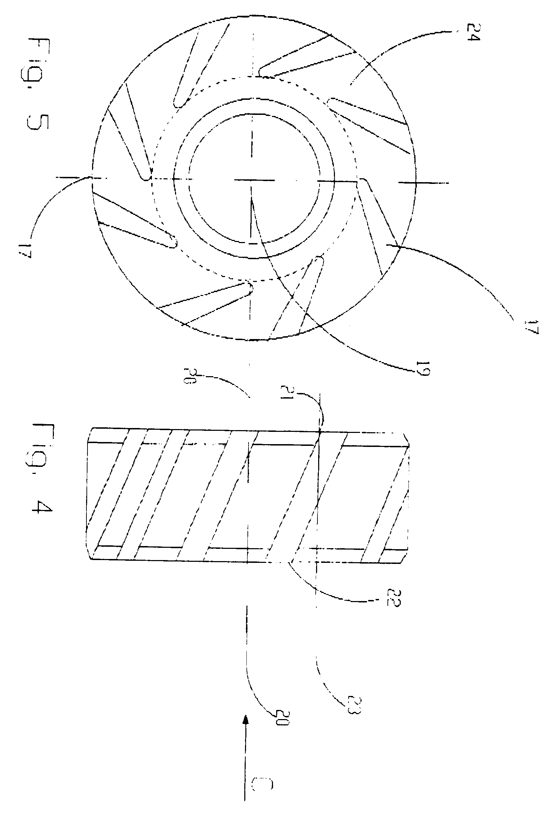

In Figs. 4 and 5, the sliding shoe (8) shows the direction of clefts (17) diagonally oriented relatively to their axis (20), so as to obtain the crossing of the opposite end points (21) (22) of said clefts with a straight line (23) ideally parallel to said axis (20). In this way, if flanges (24) should happen to be on an edge (25) (see Fig. 3) of opening (16) of extension (2), they would remain all the same in an active position (meshing) with the internal sliding surface (7), avoiding harmful crawlings. Besides, the diagonal (or helical) direction of cleft (17) of sliding shoe (8) facilitates the introduction of flange (24) which, towards the limit of the steering travel, may in some cases go beyond the end portion of opening (16) on extension (2). To complete the embodiment of the gear subject matter of this invention, a spring (not shown) is provided inside the craddle support (5), which spring, compressed by a ring nut (26), causes said support (6) to press continuously the teeth of the rock rod (5) against the teeth of pinion (4). Along the rack rod (5) two rings (27, 28) are inserted which circumscribe the shifting limits or travel of the steering of said rod in correspondence of a wall (29) for ring (27) and a wall (30) for ring (28).

In order to protect the gear from external agents and to avoid the leakage of the lubricant provided for it, the gear subject matter of this invention comprises a bellows-shroud (31) connected to the cylinder block (1) and extension (2) of the body and to rings (32) (see Fig. 2), fixed on bushing (13) of bolts (12), which bellows-shroud alternatively compresses and extends according the the movement direction of the rack rod.

Also the stem (not shown) of pinion (4) may be provided with a protection means.

The free end of extension (2) is provided with an element (33) from rubber, which has the twofold function of protecting the gear and anchoring it to the chassis of the motor vehicle. The free end of the cylinder block (1) is provided with a protection hull (34).

Although this invention has been described in conjunction with a specific embodiment, it is evident that many alternatives and variants will be apparent to those skilled in the art, in the light of the foregoing description. Accordingly, this invention encompasses all of the alternatives and variants that fall within the scope of the attached claims.

## Claims

1. A rack-and-piston steering gear for motor vehicles, comprising a body housing a pinion (4) and a rack road (5), engaged with the teeth of the pinion, said rack rod (5) shifting longitudinally within said body and being supported by two supporting elements, the first supporting element being located in correspondence of the zone of engagement between the teeth of the pinion (4) and the teeth of the rack, and pushed by elastic means against the rack rod (5), causing the teeth of the pinion (4) to adhere continuously to those of the rack; and the second supporting element being located on the opposite side relatively to the first one; said rack rod (5) being connected to the wheel of the motor vehicle by means of tie-rods (15); the body of the steering gear being composed by a cylinder block (1) and an extension (2), caused to be integral to one another; the second supporting element being constituted by a cylindrical sliding shoe (8) connected to the rack rod (5) and sliding on the internal surface (7) of extension (2), and tie-rods (15) being fastened to the rack rod (5) near the sliding shoe (8) by means of bolts (12) and bushings (13), which slide in a longitudinal opening (16) obtained along the wall of extension (2); characterized in that the sliding shoe (8) is provided with one or more peripheral cleft-like grooves (17) which start from its external peripheral surface and extend in depth in a direction not directed towards its centre (19); the portions (24) of the sliding shoe (8) situated between two consecutive cleft-like grooves (17) being flexible and slightly strainingly engaging the internal surface (7) of the extension (2).

2. The steering gear according to claim 1, wherein the position of the sliding shoe (8) changes, relatively to the first supporting element, according to the same rate as the shifting made by the rack rod (5), and extends on the whole extension of the internal surface (7) of extension (2), in combination with an equal shifting of the sliding shoe (8).

3. The steering gear according to claim 1 or 2, wherein the peripheral cleft-like grooves (17) are perpendicular to the two sides of the sliding shoe (8).

4. The steering gear according to anyone of the preceding claims from 1 to 2, wherein the peripheral cleft-like grooves (17) are diagonal relatively to the axis (20) of the sliding shoe (8).

5. The steering gear according to claim 4, wherein the opposite end points (21,22) of the cleft-like grooves (17) are located on a line crossing a straight line (23) parallel to the axis (20) of the sliding shoe (8).

6. The steering gear according to anyone of the preceding claims, wherein the sliding shoe (8) is manufactured of plastic material having a low wear coefficient.

7. The steering gear according to anyone of the preceding claims, wherein the rack rod (5) is provided with two rings (27,28) which define the shifting of the rod or steering travel.

8. The steering gear according to anyone of the preceding claims, wherein a bellows-shroud (31) is connected to the cylinder block (1), to extension (2) and to rings (32) fastened on the bushings (13) of the bolts (12).

9. The steering gear according to anyone of the preceding claims, wherein the free end of extension (2) is provided with a rubber element (33) protecting the gear and anchoring it to the chassis of the motor vehicle.

## Patentansprüche

1. Zahnstangen-und-Ritzellenkgetriebe für Kraftfahrzeuge, umfassend einen Körper, in dem ein Ritzel (4) und eine Zahnstange (5) untergebracht sind, wobei die Zahnstange (5) in die Ritzelzähne eingreift und sich innerhalb des Körpers in einer Längsrichtung verstellt und durch zwei Tragglieder getragen wird, wobei das erste Tragglied entsprechend dem Eingriffsfeld zwischen den Ritzelzähnen und den Zahnstangenzähnen liegt und durch eine elastische Vorrichtung gegen die Zahnstange (5) gedrückt wird, so daß die Ritzelzähne an den Zahnstangenzähnen kontinuierlich anliegen; und das zweite Tragglied relativ zum ersten Tragglied auf der gegenüberliegenden Seite angeordnet ist, wobei die Zahnstange (5) mittels Verbindungsstangen (15) mit dem Fahrzeugrad verbunden ist, wobei der Lenkgetriebekörper von einem Zylinderblock (1) und einer Erweiterung (2) gebildet wird, die eine Einheit bilden, wobei das zweite Tragglied durch einen zylindrischen Gleitschuh (8) gebildet ist, der mit der Zahnstange (5) verbunden ist und an der Innenfläche (7) der Erweiterung gleitet, und wobei die Verbindungsstangen (15) nahe dem Gleitschuh an der Zahnstange (5) mittels Bolzen (12) und Büchsen (13) befestigt sind, die in einem Längsloch (16) gleiten, das längs der Wand der Erweiterung (2) ausgebildet ist,
**dadurch gekennzeichnet**,
daß der Gleitschuh (8) eine oder mehrere kluftartige Nuten (17) am Umfang aufweist, wobei diese Nuten an der Außenumfangsfläche beginnen und sich mit ihrer Tiefe in eine Richtung erstrecken, die nicht auf die Gleitschuhmitte (19) zu verläuft, und wobei die Abschnitte (24) des Gleitschuhs (8) zwischen zwei aufeinanderfolgenden kluftartigen Nuten (17) liegen und federnd und geringfügig anspannend in die Innenfläche (7) der Erweiterung (2) eingreifen.

2. Lenkgetriebe nach Anspruch 1, wobei sich die Lage des Gleitschuhs (8) relativ zum ersten Tragglied um den gleichen Betrag ändert, wie sich die Zahnstange (5) verstellt, und in Verbindung mit einem gleichen Verstellen des Gleitschuhs (8) über den ganzen Verlauf der Innenfläche (7) der Erweiterung (2) verläuft.

3. Lenkgetriebe nach Anspruch 1 oder 2, wobei die kluftartigen Nuten (17) an der Außenseite senkrecht zu den zwei Seiten des Gleitschuhs (8) verlaufen.

4. Lenkgetriebe nach Anspruch 1 oder 2, wobei die kluftartigen Nuten (17) an der Außenseite relativ zur Achse (20) des Gleitschuhs (8) diagonal verlaufen.

5. Lenkgetriebe nach Anspruch 4, wobei die sich gegenüberliegenden Endpunkte (21, 22) der kluftartigen Nuten (17) auf einer Linie liegen, die eine gerade Linie (23) quert, die parallel zur Achse (20) des Gleitschuhs (8) verläuft.

6. Lenkgetriebe nach einem der vorhergehenden Ansprüche, wobei der Gleitschuh (8) aus Kunststoffmaterial mit einer niedrigen Abnutzungsgröße besteht.

7. Lenkgetriebe nach einem der vorhergehenden Ansprüche, wobei die Zahnstange (5) zwei Ringe (27, 28) aufweist, die das Verstellen der Zahnstange oder den Lenkhub bestimmen.

8. Lenkgetriebe nach einem der vorhergehenden Ansprüche, wobei ein Balgmantel (31) mit dem Zylinderblock (1), mit der Erweiterung (2) und mit auf den Büchsen (13) der Bolzen (12) befestigten Ringen (32) verbunden ist.

9. Lenkgetriebe nach einem der vorhergehenden Ansprüche, wobei das freie Ende der Erweiterung (2) ein Gummielement (33) aufweist, das das Getriebe schützt und es an dem Fahrzeugfahrgestell verankert.

## Revendications

1. Mécanisme de direction à crémaillère et piston pour véhicules automobiles, comprenant un corps logeant un pignon (4) et une tige de crémaillère (5), engagée avec les dents du pignon, ladite tige de crémaillère (5) se déplaçant longitudinalement au sein dudit corps et étant supportée par deux éléments de support, le premier élément de support étant situé en correspondance de la zone d'engagement entre les dents du pignon (4) et les dents de la crémaillère, et poussé par un moyen élastique contre la tige de crémaillère (5), amenant les dents du pignon (4) à adhérer en continu à celles de la crémaillère ; et le deuxième élément de support étant situé sur le côté opposé relativement au premier élément ; ladite tige de crémaillère (5) étant reliée à la roue du véhicule automobile au moyen de barres d'accouplement (15) ; le corps du mécanisme de direction étant constitué par un bloc-cylindres (1) et une extension (2) amenés à être d'un seul tenant ; le deuxième élément de support étant constitué par un sabot de glissement cylindrique (8) relié à la tige de crémaillère (5) et glissant sur la surface interne (7) de l'extension (2), et les barres d'accouplement (15) étant fixées à la tige de crémaillère (5) près du sabot de glissement (8) au moyen de boulons (12) et de douilles (13), qui glissent dans une ouverture longitudinale (16) réalisée le long de la paroi de l'extension (2) ; caractérisée en ce que le sabot de glissement (8) est doté d'une ou plusieurs rainures périphériques en forme de fentes (17) qui partent de sa surface périphérique externe et s'étendent en profondeur dans une direction non orientée vers son centre (19) ; les parties (24) du sabot de glissement (8) situées entre deux rainures en forme de fentes (17) consécutives étant flexibles et engageant avec une légère tension la surface interne (7) de l'extension (2).

2. Mécanisme de direction selon la revendication 1, dans laquelle la position du sabot de glissement (8) change, relativement au premier élément de support, au même rythme que le déplacement de la tige de crémaillère (5), et s'étend sur toute l'étendue de la surface interne (7) de l'extension (2), en combinaison avec un déplacement de la même longueur du sabot de glissement (8).

3. Mécanisme de direction selon la revendication 1 ou 2, dans laquelle les rainures périphériques en forme de fentes (17) sont perpendiculaires aux deux côtés du sabot de glissement (8).

4. Mécanisme de direction selon l'une quelconque des revendications précédentes 1 à 2, dans laquelle les rainures périphériques en forme de fentes (17) sont en diagonale relativement à l'axe (20) du sabot de glissement (8).

5. Mécanisme de direction selon la revendication 4, dans laquelle les points d'extrémités opposées (21, 22) des rainures en forme de fentes (17) sont situés sur une ligne croisant une ligne droite (23) parallèle à l'axe (20) du sabot de glissement (8).

6. Mécanisme de direction selon l'une quelconque des revendications précédentes, dans laquelle le sabot de glissement (8) est fait d'une matière plastique à faible coefficient d'usure.

7. Mécanisme de direction selon l'une quelconque des revendications précédentes, dans laquelle la tige de crémaillère (5) est dotée de deux anneaux (27, 28) qui définissent le déplacement de la tige ou la distance de direction.

8. Mécanisme de direction selon l'une quelconque des revendications précédentes, dans laquelle une enveloppe du type soufflet (31) est reliée au bloc-cylindres (1), à l'extension (2) et aux anneaux (32) fixés sur les douilles (13) des boulons (12).

9. Mécanisme de direction selon l'une quelconque des revendications précédentes, dans laquelle l'extrémité libre de l'extension (2) est dotée d'un élément de caoutchouc (33) protégeant la direction et l'ancrant au châssis du véhicule automobile.
